# EUROPEAN PATENT SPECIFICATION

(11) **EP 1 517 616 B1**
(45) Date of publication and mention of the grant of the patent: **01.03.2017**
(21) Application number: 02754550.8
(22) Date of filing: 02.07.2002
(51) Int. Cl.: A23G 4/00

(54) **COMPRESSED CHEWING GUM TABLET II**
ZUZAMMENGEPRESSTE KAUGUMMITABLETTE
PLAQUETTE II DE GOMME A MACHER COMPRIMEE

(43) Date of publication of application: 30.03.2005
(73) Proprietor: Fertin Pharma A/S, 7100 Vejle (DK)
(72) Inventor: NISSEN, Vibeke, DK-7000 Fredericia (DK)
(74) Representative: Patentgruppen A/S
(86) International application number: PCT/DK2002/000461
(87) International publication number: WO 2004/004478

(56) References cited:
- EP-A- 0 151 344
- DE-A- 2 808 160
- US-A- 4 000 321
- US-A- 4 737 366
- US-A- 5 017 385

## Description

### Field of the invention

The present invention relates to a chewing gum manufacturing process and a gum base granulate.

### Background of the invention

Several different processes for manufacturing of chewing gum are known within the art. The different processes may be overall categorized in basically two different processes; that is chewing gum mechanically mixed on the basis of a gum base compounds or chewing gum compressed on the basis of more or less discrete gum base particles. The first type of chewing gum generally benefits of a very comfortable texture, among several different parameters, most likely due to the mechanically mixing of the polymers and for example the flavors. One disadvantage of such type of process and chewing gum is however, that the different ingredients, such as encapsulated flavor, active ingredients, etc. may be more or less destroyed or degraded by the mixing process.

The second type of chewing gum generally benefits of a relatively gentle handling of vulnerable additives, such as the above mentioned flavors or active ingredients. One disadvantage of such type of chewing gum is however, that the resulting chewing gum tablet may typically disintegrate to easy, especially during the initial chew of the gum.

It has been moreover recognized within the art of chewing gum manufacturing that the process of compressing a chewing gum on the basis of a pre-processed chewing gum material is complicated for different reasons.

US patent 4,753,805 discloses a method of manufacturing compressed chewing gum on the basis of a pre-processed chewing gum composition. One disadvantage of the disclosed chewing gum manufacturing method is that the chewing gum composition, in order to facilitate the final compression process, requires different additives, referred to as compression aid. Evidently, such additives represent further costs and moreover, the additives become an inherent part of the final obtained chewing gum, thereby affecting the final texture or taste.

US patent 4,000,321 discloses a further method of obtaining a compressed chewing gum on the basis of a pre-processed gum base granulate. One disadvantage of the disclosed method is that the applied granulates needs to be heated in order to become self-adhered together. In this way, both the active ingredients may become degenerated and moreover, the texture may become too "solid-like".

It is one object of the invention to provide a chewing gum compression chewing gum composition, which, when processed by means of compression provides a texture like conventionally mixed chewing gum.

### Summary of the invention

The invention relates to a compressed chewing gum tablet comprising a chewing gum center fully or partly encapsulated by a barrier layer selected from the group of lubricants, anti-adherents and glidants or combinations thereof,
said gum center comprising a compression of gum base granules and chewing gum additives,
said gum base granules having a moderated tackiness,
wherein said moderated tackiness is obtained by means of at least one natural resin incorporated in at least a part of the gum base granules,
wherein the compressed chewing gum tablet comprises 3 % to 50 % by weight of natural resins, and wherein the gum center is free of lubricants, anti-adherents and glidants.

According to the invention, the moderated tackiness of the gum base granules should simply be enough to keep the compressed gum base granules together, especially during the initial chew.

Gum base additives may, according to the invention broadly refer to sweeteners, flavors, acids, colors, active ingredients, cooling agents, freeze-dried fruit, etc. Moreover, the applied ingredients may be encapsulated.

Moreover, according to the invention, it has been recognized that controlling of tackiness, preferably established by means of natural resins facilitates a more freely selected group of tablet shapes.

According to the invention it is now possible to obtain a chewing gum tablet, made by means of compression of a gum base granulate and chewing gum additives, having an acceptable and improved immediate initial texture.

According to the invention, it is possible to obtain the desired texture by means of natural resins mixed into the gum base previous to the compression of gum base granulates.

It should be noted that although natural resins are preferred for the adjustment of the desired texture, synthetic resin may be added to the gum base or the chewing gum, if so desired.

Evidently, according to the invention, further additives may be added to the gum base, e.g. during mixing or after mixing.

Moreover, according to the invention, it has been recognized that the natural resin facilitates an advantageous overall flavor release when the compressed chewing gum tablet is chewed. This may partly be due to the fact that the initial chewing of the gum tablet results in an immediate release of flavor particle and at the same time, that a part of the dissolved flavor particles reacts or become incorporated into the chewing gum base.

The last part of the flavor release results in prolonging of the overall flavor release time.

According to conventional chewing gum manufacturing several efforts has been made in making chewing gum less sticky.

Moreover, a further advantage of the chewing gum tablet according to the invention is that the tablet may be handled and temporarily stored prior to the final processing such as coating and the final packaging.

The upper limit of the desired tackiness is reached, when the gum base granules can no longer be processed by conventional compression techniques.

The barrier layer is basically multifunctional according to a preferred embodiment of the invention. One function is that the applied gum base granulate contacting compression mechanics, i.e. punching forms, etc. is protected against undesired sticking. In other words, the layer functions as a kind of lubricant layer. A further, very advantageous feature of the barrier layer is that the outer contacting surface, i.e. the surface of the chewing gum, the consumer/user of the chewing typically needs to touch is made less sticky, thereby preventing undesired sticking to the fingers.

Generally, the above mentioned advantages may be summed up to be that stickiness may actually be obtained in chewing gums made by compression and not only by the traditional mixing methods.

Moreover, according to the invention, it has been recognized that the natural resin facilitates an advantageous overall flavor release when the compressed chewing gum tablet is chewed. This may partly be due to the fact that the initial chewing of the gum tablet results in an immediate release of distinct flavor particle and at the same time, that a part of the dissolved flavor particles reacts or become incorporated into the chewing gum base.

Moreover, according to the invention, the applied barrier layer may form or form part of a humidity barrier. Due to the fact that relatively low water content is preferred according to an embodiment of the invention, the tablet should preferably be protected against too much absorption of humidity from the air.

It has surprisingly been found that conventional natural resins may advantageously be applied for compressed chewing gum.

According to the invention, the % by weight of the chewing gum tablet refers to the un-coated chewing gum tablet.

When the compressed chewing gum tablet comprises 4% to 30% by weight of natural resins, a further advantageous embodiment of the invention has been obtained.

According to the most preferred embodiment of the invention, the natural resin comprises about 3 % to 8 % by weight of natural resins
When the compressed chewing gum tablet comprises0.5% to 30% by weight of elastomers, preferably 5% to 25% by weight, a further advantageous embodiment of the invention has been obtained..

When the compressed chewing gum tablet comprises 0.1 % to 15 % by weight of flavoring agents, preferably 0.8 % to 5 % by weight, a further advantageous embodiment of the invention has been obtained.

The amount of flavor depends heavily of the applied type of flavor and whether the flavor has been partly teared into the gum base previous to the compression of the gum base granules and the chewing gum additives.

When the natural resins provides an improved and sticky texture of the tablet, a further advantageous embodiment of the invention has been obtained.

According to the invention, natural resins provide an improved and sticky texture of the final compressed tablet compared to traditional compressed chewing gum.

When the barrier layer comprises e.g. lubricants, anti-adherents and glidants, a further advantageous embodiment of the invention has been obtained.

When the barrier layer comprises magnesium stearate, a further advantageous embodiment of the invention has been obtained.

When the barrier layer comprises metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof, a further advantageous embodiment of the invention has been obtained.

According to the invention, undesired side-effects of lubricants, anti-adherents and glidants on especially the natural resins within the gum center may be avoided.

When the gum center comprises wax, a further advantageous embodiment of the invention has been obtained.

The desired moderated tackiness may in certain compositions be "tuned" by means of the wax content, which, when applied in an increased amount in the context of certain gum base compounds, may increase the tackiness of the final barrier-encapsulated composition.

When the gum center isfree of wax, a further advantageous embodiment of the invention has been obtained.

According to an embodiment of the invention, adjustment of the desired initial tackiness may be performed without wax.

When the barrier layer is provided a during the manufacturing of the chewing gum tablet, a further advantageous embodiment of the invention has been obtained.

According to a preferred embodiment of the invention, chewing gum granulate comprises about 5 to 20 % by weight of at least one natural resin.

According to the invention, it has surprisingly been discovered that compressed chewing gums made on the basis of at least one natural resin features an improved initial chew, when natural resin is applied in the chewing gum forming gum base granulate.

When the at least one flavor agent at least one active ingredient has been teared into the gum base, a further advantageous embodiment of the invention has been obtained.

According to the invention, tearing may also be referred to as pre-mixing.

When the plasticizer comprises approximately 0.5 to about 35 weight percent of the chewing gum (base), a further advantageous embodiment of the invention has been obtained.

Moreover, the invention relates to a method of providing a compressed chewing gum comprising the steps of
- mixing at least one elastomer and at least one plasticizer into a homogenous gum base,
- said gum base comprising 5% to 75% by weight of natural resin,
- granulating the gum base,
- blending the granulated gum base with chewing gum additives
- depositing a barrier layer selected from the group of lubricants, anti-adherents and glidants or combinations thereof on at least a part of a gum center formed from a formation of granulate and
- compressing the mixture into a tablet.

Preferably, the gum base comprises about 8% to 40% by weight of natural resin Evidently, according to a further embodiment of the invention, the natural resin may be supplemented by a certain of synthetic resin, such as PVA.

When at least a part of the gum base being premixed with flavor, a further advantageous embodiment of the invention has been obtained.

When the gum base additives comprising active ingredients, a further advantageous embodiment of the invention has been obtained.

Magnesium stearate may e.g. be applied as a pulverized parting compound.

The barrier layer may be added to the final tablet for example by depositing dosed quantities of pulverized lubricants and parting compounds on the materials contacting surfaces of pressing tools of tab letting machines.

The barrier layer comprises metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

When the gum base granules comprises pre-mixed active ingredients, a controlled release of active ingredients may be obtained by means of a at least a double active ingredients buffer, the first buffer comprising active ingredients blended into the final mix immediately prior to compression, the second buffer comprising active ingredients blended into the gum base prior to the blending of gum base and chewing gum base additives.

In this way, the balance between pre-mixed ingredients and normal compressed ingredients, a certain desired balance between early and late release of active ingredients may be obtained.

### Figures

The invention will be described in the following with reference to the figures in which
fig. 1 illustrates a chewing gum tablet according to the invention,
fig. 2 illustrates a flowchart of a chewing gum manufacturing method according to one embodiment of the invention and where
fig. 3 illustrates the compression of a chewing gum according to one embodiment of the invention.

### Detailed description

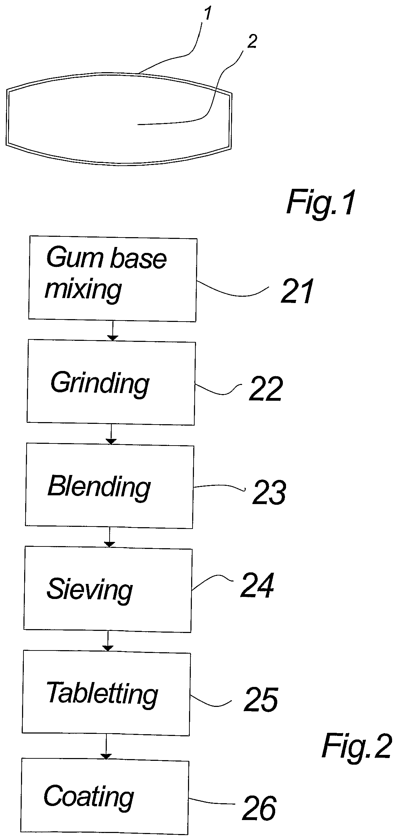

Fig. 1 illustrates a chewing gum tablet according to the invention.

The fig. 1 illustrates a chewing gum tablet made on the basis of compressed gum base granulates. The gum tablet comprises a barrier layer 1 encapsulating or partly encapsulating a gum base center 2.

The gum base granulates are made on the basis of a gum base. As used herein, the expressions "gum base" refers in general to the water insoluble part of the chewing gum which typically constitutes 10 to 90% by weight including the range of 15 -50% by weight of the total chewing gum formulation. Chewing gum base formulations typically comprises one or more elastomeric compounds which may be of synthetic or natural origin, one or more resinous compounds which may be of synthetic or natural origin, fillers, softening compounds and minor amounts of miscellaneous ingredients such as antioxidants and colorants, etc.

According to a preferred embodiment of the invention, the gum base should always comprise at least an amount of 5% by weight of natural resins.

The composition of chewing gum base formulations which are admixed with chewing gum additives as defined below can vary substantially depending on the particular product to be prepared and on the desired masticatory and other sensory characteristics of the final product. However, typical ranges (weight%) of the above gum base components are: 5 to 50% by weigth elastomeric compounds, 5 to 55% by weight elastomer plasticizers, 0 to 50% by weight filler/texturiser, 5 to 35% by weight softener and 0 to 1% by weight of miscellaneous ingredients such as antioxidants, colourants, etc.

The barrier layer 1 may preferably be applied during or prior to the processing of the tablet

The barrier layer, e.g. Mg Stearate, forms an outer barrier of the gum tablet.

Further layers may be applied to the tablet, such as traditional coatings.

Fig. 2 shows a typical flowchart, illustrating the major steps of one of several applicable manufacturing process within the scope of the invention.

In step 21, a suitable gum base is prepared according to the prescriptions of the invention.

According to a preferred embodiment of the invention, the gum base is partly pre-mixed with a moderated amount of flavor and/or active ingredients.

The pre-mixing of flavors or active ingredients may e.g. be performed by means of conventional mixers, e.g. a Z-blade mixer, during no or preferably relatively little added heating and substantially under atmospheric pressure. Preferably, the pre-mixing (also referred to a tearing) should be purely mechanically should be performed sufficiently enough to result in a homogeneous blend of the flavor and/or active ingredients into the gum base.

Typical duration in time of mixing may be between few minutes op to e.g. 30 minutes. Evidently, according to the invention, other temperatures, pressures, duration in time and mixing methods may be applied for the purpose of mixing active ingredients and/or flavors into the gum base and thereby the gum base granulate applied for the subsequent compression.

In step 22, the provided gum base is grinding (by some referred to as granulated). The grinding granulation may be performed by means of well-known techniques. One of those techniques implies an initial cooling of the gum base immediately prior to granulation. If the consistence of the gum base allows so, the provided gum base may be granulated at room temperature.

According to an advantageous embodiment of the invention, bulk-sweeteners may advantageously be applied as a grinding aid. Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

In step 23, the gum base granulate is blended with suitable chewing gum additives.

In the present context, chewing gum additives include bulk sweeteners, high intensity sweeteners, flavouring agents, softeners, emulsifiers, colouring agents, binding agents, acidulants, fillers, antioxidants and other components such as pharmaceutically or biologically active substances, that confer desired properties to the finished chewing gum product.

Examples of suitable sweeteners are listed below.

Suitable bulk sweeteners include e.g. both sugar and non-sugar components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High intensity artificial sweetening agents can also be used alone or in combination with the above sweeteners. Preferred high intensity sweeteners include, but are not limited to sucralose, aspartame, salts of acesulfame, alitame, saccharin and its salts, neotam, cyclamic acid and its salts, glycyrrhizin, dihydrochalcones, thaumatin, monellin, sterioside and the like, alone or in combination. In order to provide longer lasting sweetness and flavour perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fibre extrusion may be used to achieve desired release characteristics. Encapsulation of sweetening agents can also be provided e.g. using as the encapsulation agent another chewing gum component such as a resinous compound.

Usage level of the artificial sweetener will vary considerably depending e.g. on factors such as potency of the sweetener, rate of release, desired sweetness of the product, level and type of flavour used and cost considerations. Thus, the active level of artificial sweetener may vary from about 0.02 to about 8% by weight. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low calorie gum is desired, a low caloric bulking agent can be used. Examples of low caloric bulking agents include polydextrose, Raftilose, Raftilin, Inuline, fructooligosaccharides (NutraFlora^{®}), palatinose oligosaccharided; guar gum hydrolysates (e.g. Sun Fiber^{®}) or indigestible dextrins (e.g. Fibersol^{®}). However, other low calorie-bulking agents can be used.

Further chewing gum additives which may be included in the chewing gum mixture processed in the present process include surfactants and/or solubilisers, especially when pharmaceutically, cosmetically or biologically active ingredients are present. As examples of types of surfactants to be used as solubilisers in a chewing gum composition according to the invention reference is made to H.P. Fiedler, Lexikon der Hilfstoffe fur Pharmacie, Kosmetik und Angrenzende Gebiete, page 63-64 (1981) and the lists of approved food emulsifiers of the individual countries. Anionic, cationic, amphoteric or non-ionic solubilisers can be used. Suitable solubilisers include lecithins, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllactylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. The expression "solubiliser" is used in the present text to describe both possibilities, the solubiliser used must be suitable for use in food and/or medicine.

In the presence of an active ingredient the chewing gum may preferably also comprise a carrier known in the art.

One significant advantage of the present process is that the temperature throughout the entire operation can be kept at a relatively low level such as it will be described in the following. This is an advantageous feature with regard to preserving the aroma of added flavouring components which may be prone to deterioration at higher temperatures. Aroma agents and flavouring agents which are useful in a chewing gum produced by the present process are e.g. natural and synthetic flavourings (including natural flavourings) in the form of freeze-dried natural vegetable components, essential oils, essences, extracts, powders, including acids and other substances capable of affecting the taste profile. Examples of liquid and powdered flavourings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

In one preferred embodiment, the flavour is one or more natural flavouring agent(s) which is/are freeze-dried, preferably in the form of a powder, slices or pieces of combinations thereof. The particle size of such agent may be less than 3 mm, such as less than 2 mm, more preferred less than 1 mm, calculated as the longest dimension of the particle. The natural flavouring agent may also be in a form where the particle size is from about 3 µm to 2 mm, such as from 4 µm to 1 mm. Preferred natural flavouring agents include seeds from a fruit e.g. from strawberry, blackberry and raspberry.

Various synthetic flavours, such as mixed fruit flavour may also be used according to the present invention. As indicated above, the aroma agent may be used in quantities smaller than those conventionally used. The aroma agents and/or flavours may be used in an amount of from 0.01 to about 30% by weight of the final product depending on the desired intensity of the aroma and/or flavour used. Preferably, the content of aroma/flavour is in the range of from 0.2 to 3% by weight of the total composition.

According to the invention, encapsulated flavors or active ingredients, may be added to the final blend, e.g. in step 23 of fig. 2, prior to compression.

Different methods of encapsulating flavors or active ingredients, which may both refer to flavors or active ingredients mixed into the gum base and flavors or active ingredients compressed into the chewing gum may e.g. include Spray drying, Spray cooling, Film coating, Coascervation, Double emulsion method (Extrusion technology) or Prilling

Materials to be used for the above mentioned encapsulation methods may e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

Active ingredients may be added to chewing gum. Preferably, these ingredients should be added subsequent to any significant heating or mixing. In other words, the active ingredients, should preferably be added immediately prior to the compression of the final tablet.

Referring to the process illustrated in fig. 2, the adding of active ingredients may be cautiously blended with pre-mixed gum base granulates and further desired additives, immediately prior to the final compression of the tablet.

Examples of suitable active ingredients are listed below.

In one embodiment the chewing gum according to the invention comprises a pharmaceutically, cosmetically or biologically active substance. Examples of such active substances, a comprehensive list of which is found e.g. in WO 00/25598, which is incorporated herein by reference, include drugs, dietary supplements, antiseptic agents, pH adjusting agents, anti-smoking agents and substances for the care or treatment of the oral cavity and the teeth such as hydrogen peroxide and compounds capable of releasing urea during chewing. Examples of useful active substances in the form of antiseptics include salts and derivatives of guanidine and biguanidine (for instance chlorhexidine diacetate) and the following types of substances with limited water-solubility: quaternary ammonium compounds (e.g. ceramine, chloroxylenol, crystal violet, chloramine), aldehydes (e.g. paraformaldehyde), derivatives of dequaline, polynoxyline, phenols (e.g. thymol, p-chlorophenol, cresol), hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. also Martindale, The Extra Pharmacopoeia, 28th edition, page 547-578; metal salts, complexes and compounds with limited water-solubility, such as aluminium salts, (for instance aluminium potassium sulphate AlK(SO₄)₂,12H₂O) and salts, complexes and compounds of boron, barium, strontium, iron, calcium, zinc, (zinc acetate, zinc chloride, zinc gluconate), copper (copper chloride, copper sulphate), lead, silver, magnesium, sodium, potassium, lithium, molybdenum, vanadium should be included; other compositions for the care of mouth and teeth: for instance; salts, complexes and compounds containing fluorine (such as sodium fluoride, sodium monofluorophosphate, aminofluorides, stannous fluoride), phosphates, carbonates and selenium. Further active substances can be found in J. Dent.Res. Vol. 28 No. 2, page 160-171,1949.

Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

Active ingredients may comprise the below mentioned compounds or derivates thereof but are not limited thereto: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chlorhexidine, Ecabet-sodium, Haloperidol, Allopurinol, Colchinine, Theophylline, Propanolol, Prednisolone, Prednisone, Fluoride, Urea, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminium salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine.

The invention is suitable for increased or accelerated release of active agents selected among the group dietary supplements, oral and dental compositions, antiseptic agents, pH adjusting agents, anti-smoking agents, sweeteners, flavourings, aroma agents or drugs. Some of those will be described below.

The active agents to be used in connection with the present invention may be any substance desired to be released from the chewing gum. The active agents, for which a controlled and/or accelerated rate of release is desired, are primarily substances with a limited water-solubility, typically below 10 g/100 ml inclusive of substances which are totally water-insoluble. Examples are medicines, dietary supplements, oral compositions, anti-smoking agents, highly potent sweeteners, pH adjusting agents, flavourings etc.

Other active ingredients are, for instance, paracetamol, benzocaine, cinnarizine, menthol, carvone, coffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folinic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutritients acccepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminium salts, (for instance aluminium potassium sulfate AlK(SO₄)₂,12H₂O) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent.Res. Vol. 28 No. 2, page 160-171, 1949, wherein a wide range of tested compounds is mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

In a further embodiment, the sucrose fatty acid esters may also be utilised for increased release of sweeteners including for instance the so-called highly potent sweeteners, such as for instance saccharin, cyclamate, aspartame, thaumatin, dihydrocalcones, stevioside, glycyrrhizin or salts or compounds thereof. For increased released of sweetener, the sucrose fatty acids preferable have a content of palmitate of at least 40% such as at least 50%.

Further examples of active agents are medicines of any type.

Examples of active agents in the form of medicines include coffeine, salicylic acid, salicyl amide and related substances (acetylsalicylic acid, choline salicylate, magnesium salicylate, sodium salicylate), paracetamol, salts ofpentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov.85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH.RH), desmopressin acetate (DDAVP), isoxsuprine hydrochloride, ergotamine compounds, chloroquine (phosphate, sulfate), isosorbide, demoxytocin, heparin. Other active ingredients include beta-lupeol, Letigen^{®}, Sildenafil citrate and derivatives thereof.

Dental products include Carbamide, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminium fluoride

Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride,

Vitamins include A, B1, B2, B6, B12, Folin acid, niacin, Pantothensyre, biotine, C, D, E, K. Minerals include Calcium, phosphor, magnesium, iron, Zink, Cupper, Iod, Mangan, Crom, Selene, Molybden. Other active ingredients include: Q10^{®}, enzymes. Natural drugs including Ginkgo Biloba, ginger, and fish oil.

The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid. In a preferred embodiment the invention relates to the release of Nicotine and its salts

As above mentioned active ingredients and/or flavors may be pre-mixed into the gum base.

When the gum base granules comprises pre-mixed active ingredients, a controlled release of active ingredients may be obtained by means of a at least a double active ingredients buffer, the first buffer comprising active ingredients blended into the final mix immediately prior to compression, the second buffer comprising active ingredients blended into the gum base prior to the blending of gum base and gum base additives.

Generally, release of flavor and/or active ingredients may be adjusted by adjustment of the balance between pre-mixed ingredients and the chewing gum additives added prior to compression.

In step 24, the resulting blend is prepared for tabletting by means of sieving.

The degree of sieving depends primarily of how the gum base granulate(s) "reacts" when chewing gum additives are blended together.

If suitable, an initial pre-forming of the granulates is supplemented by spraying the barrier layer at the surface or at least a part of the surface of the pre-formed granulates. This technique and variants thereof may be referred to as an explicit barrier layer depositing.

However, preferably, the barrier layer is established in a more implicit way. This technique and variants thereof may be referred to as implicit barrier layer depositing. This technique implies that the barrier layer compound is sprayed or deposited initially on the contacting surfaces of the pressing tools of a compression machine.

An applicable technique suitable for implicit-barrier layer depositing is disclosed in US patent 5,643,630.

In step 25, the grinded blend is applied to the pressing tools of a tabletting machine and compressed into chewing gum tablets.

The applied barrier layer may comprise of e.g. lubricants, anti-adherents and glidants.

Magnesium stearate may e.g. be applied as a pulverized parting compound.

The barrier layer may be added to the final tablet for example by depositing dosed quantities of pulverized lubricants and parting compounds on the materials contacting surfaces of pressing tools of tabletting machines.

The barrier layer may be established by means of for example metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

In step 26, which is optional, - but preferred, the tabletted chewing gum is provided with a suitable coating.

In accordance with the invention, the chewing gum element comprises about 1 to about 75% by weight of an outer coating applied onto the chewing gum centre. In the present context, a suitable outer coating is any coating that results in an extended storage stability of the compressed chewing gum products as defined above, relative to a chewing gum of the same composition that is not coated. Thus, suitable coating types include hard coatings, film coatings and soft coatings of any composition including those currently used in coating of chewing gum, pharmaceutical products and confectioneries.

According to a preferred embodiment of the invention, film coating is applied to the compressed chewing gum tablet.

One presently preferred outer coating type is a hard coating, which term is used in the conventional meaning of that term including sugar coatings and sugar-free (or sugarless) coatings and combinations thereof. The objects of hard coating is to obtain a sweet, crunchy layer which is appreciated by the consumer and to protect the gum centres for various reasons as. In a typical process of providing the chewing gum centres with a protective sugar coating the gum centres are successively treated in suitable coating equipment with aqueous solutions of crystallisable sugar such as sucrose or dextrose, which, depending on the stage of coating reached, may contain other functional ingredients, e.g. fillers, colours, etc. In the present context, the sugar coating may contain further functional or active compounds including flavour compounds, pharmaceutically active compounds and/or polymer degrading substances.

In the production of chewing gum it may, however, be preferred to replace the cariogenic sugar compounds in the coating by other, preferably crystallisable, sweetening compounds that do not have a cariogenic effect. In the art such coating are generally referred to as sugarless or sugar-free coatings. Presently preferred non-cariogenic hard coating substances include polyols, e.g. sorbitol, maltitol, mannitol, xylitol, erythritol, lactitol, isomalt and tagatose which are obtained by industrial methods by hydrogenation of D-glucose, maltose, fructose or levulose, xylose, erythrose, lactose, isomaltulose and D-galactose, respectively.

In a typical hard coating process as it will be described in details in the following, a syrup containing crystallisable sugar and/or polyol is applied onto the gum centres and the water it contains is evaporated off by blowing with warm, dry air. This cycle must be repeated several times, typically 10 to 80 times, in order to reach the swelling required. The term "swelling" refers to the increase in weight of the products, as considered at the end of the coating operation by comparison with the beginning, and in relation to the final weight of the coated products. In accordance with the present invention, the coating layer constitutes about 1 to about 75% by weight of the finished chewing gum element, such as about 10 to about 60% by weight, including about 15 to about 50% by weight.

In further useful embodiments the outer coating of the chewing gum element of the invention is an element that is subjected to a film coating process and which therefore comprises one or more film-forming polymeric agents and optionally one or more auxiliary compounds, e.g. plasticizers, pigments and opacifiers. A film coating is a thin polymer-based coating applied to a chewing gum centre of any of the above forms. The thickness of such a coating is usually between 20 and 100 µm. Generally, the film coating is obtained by passing the chewing gum centres through a spray zone with atomised droplets of the coating materials in a suitable aqueous or organic solvent vehicle, after which the material adhering to the gum centres is dried before the next portion of coating is received. This cycle is repeated until the coating is complete.

In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers, also referred to as functional polymers are polymers that, in addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers include: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments, the film coating layer of the chewing gum elements according to the invention comprises a plasticizing agent having the capacity to alter the physical properties of a polymer to render it more useful in performing its function as a film-forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity. In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer(s) and plasticizing agent(s) for the outer coating of the present chewing gum element is made with due consideration for achieving the best possible barrier properties of the coating in respect of dissolution and diffusion across the film of moisture and gasses.

The film coating of the chewing gum elements may also contain one or more colourants or opacifiers. In addition to providing a desired colour hue, such agents may contribute to protecting the compressed gum base against pre-chewing reactions, in particular by forming a barrier against moisture and gasses. Suitable colourants/pacifiers include organic dyes and their lakes, inorganic colouring agents, e.g. titanium oxide and natural colours such as e.g. β-carotene.

Additionally, film coatings may contain one or several auxiliary substances such as flavours and waxes or saccharide compounds such as polydextrose, dextrins including maltodextrin, lactose, modified starch, a protein such as gelatine or zein, a vegetable gum and any combination thereof.

In one specific embodiment the chewing gum centre is in the form of a stick which is provided on one or both sides with an edible film comprising alternate layers of a coating of a water soluble film forming agent, e.g. a cellulose derivative, a modified starch, a dextrin, gelatine, zein, a vegetable gum, a synthetic polymer and any combination thereof, and a wax such as beeswax, carnauba wax, microcrystalline wax, paraffin wax and combinations thereof.

It is also an aspect of the present invention that the outer coating of the chewing gum element can contain one or more pharmaceutically or cosmetically components including those mentioned hereinbefore.

Accordingly, in further embodiments, the above hard-coated or film-coated chewing gum element of the invention is an element where the outer coating comprises at least one additive component selected from a binding agent, a moisture absorbing component, a film forming agent, a dispersing agent, an antisticking component, a bulking agent, a flavouring agent, a colouring agent, a pharmaceutically or cosmetically active component, a lipid component, a wax component, a sugar and an acid. If it is desired to defer the effect of any of these additive components in the outer coating until mastication of the chewing gum, such components may, in accordance with the invention be encapsulated using any conventional encapsulation agent such as e.g. a protein including gelatine and soy protein, a cellulose derivative including any of those mentioned above, a starch derivative, edible synthetic polymers and lipid substances, the latter optionally in the form of liposome encapsulation.

In other embodiments, the chewing gum element according to the invention is provided with an outer coating in the form generally described in the art as a soft coating. Such soft coatings are applied using conventional methods and may advantageously consist of a mixture of a sugar or any of the above non-cariogenic, sugar-less sweetening compounds, and a starch hydrolysate.

Again, it should be noted that the above-described coating is optional or that it may be postponed until it fits into the last part of the manufacturing process due to the fact that the applied barrier layer is also acting as a complete or at least a partial barrier to transfer of humidity from the environment into the tablet.

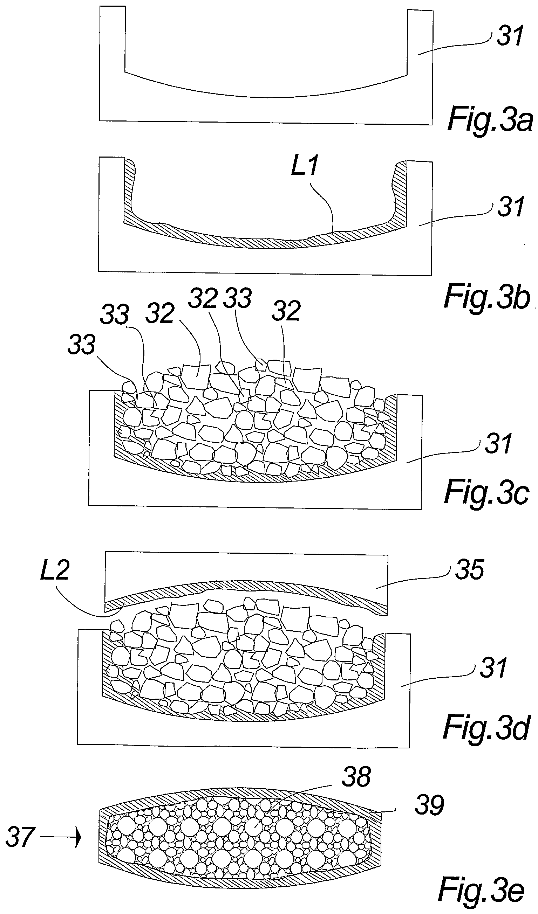

Fig. 3a to fig. 3e illustrate some important features of one embodiment of the invention.

The figures 3a to 3e illustrate a possible application of the already described 25 of fig. 2.

The below described barrier depositing method has been referred to as implicit barrier layer depositing. As above mentioned, this technique implies that the barrier layer compound is sprayed or deposited initially on the contacting surfaces of the pressing tools of a compression machine. An applicable technique suitable for implicit-barrier layer depositing is disclosed in US patent 5,643,630.

In fig. 3a a first part of a pressing tool 31 has been provided.

In fig. 3b, dosed quantities of pulverized lubricants of parting compounds has been deposited on the first part 31 of the pressing tool. The deposited layer L1 constitutes a first part of the final barrier layer of the final chewing gum.

In fig. 3c, a blend, as provided in step 23 and 24, is injected into the pressing tool 31. The blend comprises gum base granules 32 and gum base additives 33 such as additional sweeteners, additional flavors, etc. Suitable chewing gum additives has been disclosed above.

In fig. 3d, a second part of a pressing tool 35 has been provided with a second part of the final barrier layer L2.

In fig. 3e, the pressing tools 31 and 35 has been pressed together, thereby invoking a compression of the gum base blending of gum base granules 32 and further chewing gum additives 33. Basically, the resulting chewing gum tablet 37 comprises a chewing gum center 38 comprising a compression of the gum base granules 32 and the gum base additives 33.

A final barrier layer 39 is the formed as a combining of barrier layer L1 and barrier layer L2.

According to the invention, the -evidently moderated - tackiness of the gum base granules 32 or at least a part of the granules is provided by means of e.g. natural resins incorporated in the gum base granulate.

Compared to conventionally mixed chewing gum, the compression of a gum base granulate together with chewing gum additives is a relatively lenient gathering of the final chewing gum, at least with respect to temperature. However, the omission of the thoroughly tearing of the granulate together with the desired additives will, according to conventional chewing gum result in a risk of crumbling and disintegration especially during the initial chew.

According to the invention, the provided chewing gum featuring tacky granules may counteract the initial-chew invoked disintegration to such a degree, that the chewing gum remains non-crumpling until the granules are finally mixed during the chewing of the chewing gum.

Three different examples of compressed chewing gum were prepared according to the invention and one example was prepared completely without natural resin.

The below numbers refers to % by weight of the complete final chewing gum. The provided chewing gums were not provided with an added coating.

| | ex.1 | ex.2 | ex.3 | ex.4 |
|---|---|---|---|---|
| Gum base | 37 | 32 | 35 | 32 |
| Sorbitol | 58 | 61 | 60 | 61 |
| Flavor | 4 | 7 | 5 | 7 |
| APM | 0.15 | 0.15 | 0.15 | 0.15 |
| ACK | 0.15 | 0.15 | 0.15 | 0.15 |
| (nat. resin) | (5.1) | (2.0) | (4) | (-) |

The last row refers to the amount of natural resin of the complete chewing gum.

The provided chewing gum was tested by a sensory panel of 8 persons.
Example 1 and 3 were deemed to have an impressing initial chew and moreover an impressing flavor release. Deemed OK.
Example 2 were deemed to be OK, but giving a feeling of a little more vulnerable initial chew.
Example 4 had an almost liquid consistence, and the obtained chewing gum was deemed not-OK.

## Claims

1. Compressed chewing gum tablet (37) comprising a chewing gum center (38) fully or partly encapsulated by a barrier layer (39) selected from the group of lubricants, anti-adherents and glidants or combinations thereof,
said gum center (38) comprising a compression of gum base granules (32) and chewing gum additives (33),
said gum base granules (32) having a moderated tackiness,
wherein said moderated tackiness is obtained by means of at least one natural resin incorporated in at least a part of the gum base granules (32),
wherein the compressed chewing gum tablet comprises 3 % to 50 % by weight of natural resins, and wherein the gum center is free of lubricants, anti-adherents and glidants.

2. Compressed chewing gum tablet according to claim 1,
wherein the compressed chewing gum tablet comprises 4% to 30% by weight of natural resins.

3. Compressed chewing gum tablet according to claim 1 or 2,
wherein the compressed chewing gum tablet comprises 0.5% to 30% by weight of elastomers, preferably 5% to 25% by weight.

4. Compressed chewing gum tablet according to any of the claims 1 to 3,
wherein the compressed chewing gum tablet comprises 0.1 % to 15 % by weight of flavoring agents, preferably 0.8 % to 5 % by weight

5. Compressed chewing gum tablet according to any of the claims 1 to 4,
wherein the natural resins provides an improved and sticky texture of the tablet.

6. Compressed chewing gum tablet according to any of the claims 1 to 5,
said barrier layer comprises e.g. lubricants, anti-adherents and glidants.

7. Compressed chewing gum tablet according to any of the claims 1 to 6,
wherein the barrier layer comprises magnesium stearate.

8. Compressed chewing gum tablet according to any of the claims 1 to 7,
wherein said barrier layer comprises metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

9. Compressed chewing gum tablet according to any of the claims 1 to 8,
wherein the gum center comprises wax.

10. Compressed chewing gum tablet according to any of the claims 1 to 9,
wherein the gum center is free of wax.

11. Compressed chewing gum tablet according to any of the claims 1 to 10,
wherein said barrier layer is provided during the manufacturing of the chewing gum tablet.

12. Compressed chewing gum according to any of the claims 1 to 11, wherein
said natural resin comprises rosin esters

13. Compressed chewing gum according to any of the claims 1 to 12, wherein said natural resin comprises glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins or pentaerythritol esters of rosins.

14. Compressed chewing gum according to any of the claims 1 to 13, wherein said chewing gum additives comprises sweeteners in the amount of from 5 to 95% by weight of the chewing gum, more typically 20 to 80% by weight such as 30 to 60% by weight of the gum.

15. Compressed chewing gum according to any of the claims 1 to 14, wherein at least a part of the flavoring agents has been teared into the gum base previous to compression.

16. Compressed chewing gum according to any of the claims 1 to 15, wherein said chewing gum additives comprises active ingredients.

17. Compressed chewing gum according to any of the claims 1 to 16, wherein at least a part of said active ingredients been teared into the gum base previous to compression.

18. Method of providing a compressed chewing gum comprising the steps of
- mixing at least one elastomer and at least one plasticizer into a homogenous gum base,
- said gum base comprising 5% to 75% by weight of natural resin,
- granulating the gum base,
- blending the granulated gum base (32) with chewing gum additives (33)
- depositing a barrier layer (L1, L2; 39) selected from the group of lubricants, anti-adherents and glidants or combinations thereof on at least a part of a gum center formed from a formation of granulate and
- compressing the mixture into a tablet.

19. Method of providing a compressed chewing gum according to claim 18,
whereby at least a part of the gum base being premixed with flavor.

20. Method of providing a compressed chewing gum according to claim 18 or 19,
whereby said gum base additives comprising active ingredients.

21. Method of providing a compressed chewing gum according to any of claims 18 to 20,
whereby the barrier layer comprises metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

22. Chewing gum according to any of the claims 1 to 18, wherein the chewing gum has a water content of less than 2.0 %, preferably less than 1.5% by weight.

## Patentansprüche

1. Verdichtete Kaugummitablette (37), umfassend ein Kaugummizentrum (38), das vollständig oder teilweise durch eine Barriereschicht (39), ausgewählt aus der Gruppe von Schmiermitteln, Antihaftmitteln und Gleitmitteln oder Kombinationen davon, eingekapselt ist,
wobei das Gummizentrum (38) ein verdichtetes Material aus Gummigrundlagenkörnchen (32) und Kaugummizusätzen (33) umfasst,
wobei die Gummigrundlagenkörnchen (32) eine abgemilderte Klebrigkeit aufweisen, wobei die abgemilderte Klebrigkeit erhalten wird mittels mindestens eines Naturharzes,
welches in mindestens einen Teil der Gummigrundlagenkörnchen (32) inkorporiert ist,
wobei die verdichtete Kaugummitablette 3 Gew.-% bis 50 Gew.-% Naturharze umfasst und wobei das Gummizentrum frei von Schmiermitteln, Antihaftmitteln und Gleitmitteln ist.

2. Verdichtete Kaugummitablette nach Anspruch 1, wobei die verdichtete Kaugummitablette 4 Gew.-% bis 30 Gew.-% Naturharze umfasst.

3. Verdichtete Kaugummitablette nach Anspruch 1 oder 2, wobei die verdichtete Kaugummitablette 0,5 Gew.-% bis 30 Gew.-% Elastomere, vorzugsweise 5 Gew.-% bis 25 Gew.-%, umfasst.

4. Verdichtete Kaugummitablette nach einem der Ansprüche 1 bis 3, wobei die verdichtete Kaugummitablette 0,1 Gew.-% bis 15 Gew.-% Geschmack- oder Aromastoffe, vorzugsweise 0,8 Gew.-% bis 5 Gew.-%, umfasst.

5. Verdichtete Kaugummitablette nach einem der Ansprüche 1 bis 4, wobei die Naturharze eine verbesserte und klebrige Textur der Tablette bereitstellen.

6. Verdichtete Kaugummitablette nach einem der Ansprüche 1 bis 5, wobei die Barriereschicht z.B. Schmiermittel, Antihaftmittel und Gleitmittel umfasst.

7. Verdichtete Kaugummitablette nach einem der Ansprüche 1 bis 6, wobei die Barriereschicht Magnesiumstearat umfasst.

8. Verdichtete Kaugummitablette nach einem der Ansprüche 1 bis 7, wobei die Barriereschicht metallische Stearate, hydrierte pflanzliche Öle, teilweise hydrierte pflanzliche Öle, Polyethylenglycole, Polyoxyethylenmonostearate, tierische Fette, Silicate, Silicatdioxid, Talk, Magnesiumstearate, Calciumstearate, pyrogenes Siliciumdioxid, pulverförmige hydrierte Baumwollkernöle, hydrierte pflanzliche Öle, hydriertes Sojaöl und Mischungen davon umfasst.

9. Verdichtete Kaugummitablette nach einem der Ansprüche 1 bis 8, wobei das Gummizentrum Wachs umfasst.

10. Verdichtete Kaugummitablette nach einem der Ansprüche 1 bis 9, wobei das Gummizentrum frei von Wachs ist.

11. Verdichtete Kaugummitablette nach einem der Ansprüche 1 bis 10, wobei die Barriereschicht während der Herstellung der Kaugummitablette bereitgestellt wird.

12. Verdichteter Kaugummi nach einem der Ansprüche 1 bis 11, wobei das Naturharz Harzester umfasst.

13. Verdichteter Kaugummi nach einem der Ansprüche 1 bis 12, wobei das Naturharz Glycerolester von teilweise hydrierten Harzen, Glycerolester von polymerisierten Harzen, Glycerolester von teilweise dimerisierten Harzen, Glycerolester von Tallölharzen, Pentaerythritolester von teilweise hydrierten Harzen, Methylester von Harzen, teilweise hydrierte Methylester von Harzen oder Pentaerythritolester von Harzen umfasst.

14. Verdichteter Kaugummi nach einem der Ansprüche 1 bis 13, wobei die Kaugummizusätze Süßungsmittel in einer Menge von 5 bis 95 Gew.-% des Kaugummis, typischererweise 20 bis 80 Gew.-%, wie 30 bis 60 Gew.-% des Gummis, umfassen.

15. Verdichteter Kaugummi nach einem der Ansprüche 1 bis 14, wobei mindestens ein Teil der Geschmack- oder Aromastoffe vorab vor einer Verdichtung in die Gummigrundlage durch 'Tearing' eingemischt worden ist.

16. Verdichteter Kaugummi nach einem der Ansprüche 1 bis 15, wobei die Kaugummizusätze Wirkstoffe umfassen.

17. Verdichteter Kaugummi nach einem der Ansprüche 1 bis 16, wobei mindestens ein Teil der Wirkstoffe vorab vor einer Verdichtung in die Gummigrundlage durch 'Tearing' eingemischt worden ist.

18. Verfahren zum Bereitstellen eines verdichteten Kaugummis, welches die folgenden Schritte umfasst:
- Mischen von mindestens einem Elastomer und mindestens einem Weichmacher zu einer homogenen Gummigrundlage,
- wobei die Gummigrundlage 5 Gew.-% bis 75 Gew.-% Naturharz umfasst,
- Granulieren der Gummigrundlage,
- Mischen der granulierten Gummigrundlage (32) mit Kaugummizusätzen (33),
- Abscheiden einer Barriereschicht (L1, L2; 39), ausgewählt aus der Gruppe von Schmiermitteln, Antihaftmitteln und Gleitmitteln oder Kombinationen davon, auf mindestens einen Teil eines Gummizentrums, das aus einem Verband von Granulat gebildet wird, und
- Verdichten der Mischung zu einer Tablette.

19. Verfahren zum Bereitstellen eines verdichteten Kaugummis nach Anspruch 18, wobei mindestens ein Teil der Gummigrundlage vorab mit Geschmack- oder Aromastoff gemischt wird.

20. Verfahren zum Bereitstellen eines verdichteten Kaugummis nach Anspruch 18 oder 19, wobei die Gummigrundlagenzusätze Wirkstoffe umfassen.

21. Verfahren zum Bereitstellen eines verdichteten Kaugummis nach einem der Ansprüche 18 bis 20, wobei die Barriereschicht metallische Stearate, hydrierte pflanzliche Öle, teilweise hydrierte pflanzliche Öle, Polyethylenglycole, Polyoxyethylenmonostearate, tierische Fette, Silicate, Silicatdioxid, Talk, Magnesiumstearate, Calciumstearate, pyrogenes Siliciumdioxid, pulverförmige hydrierte Baumwollkernöle, hydrierte pflanzliche Öle, hydriertes Sojaöl und Mischungen davon umfasst.

22. Kaugummi nach einem der Ansprüche 1 bis 18, wobei der Kaugummi einen Wassergehalt von weniger als 2,0 Gew.-%, vorzugsweise weniger als 1,5 Gew.-% aufweist.

## Revendications

1. Plaquette de gomme à mâcher comprimée (37) comprenant un centre de gomme à mâcher (38) entièrement ou partiellement encapsulé par une couche de barrière (39) choisie dans le groupe des lubrifiants, des anti-adhérents et des agents de glissement ou de combinaisons de ceux-ci,
ledit centre de gomme (38) comprenant une compression de granulés de base de gomme (32) et d'adhésifs de gomme à mâcher (33),
lesdits granulés de base de gomme (32) ayant un caractère collant modéré,
dans laquelle ledit caractère collant modéré est obtenu au moyen d'au moins une résine naturelle incorporée dans au moins une partie des granulés de base de gomme (32),
dans laquelle la plaquette de gomme à mâcher comprimée comprend 3 % à 50 % en poids de résines naturelles, et dans laquelle le centre de gomme est dépourvu de lubrifiants, d'anti-adhérents et d'agents de glissement.

2. Plaquette de gomme à mâcher comprimée selon la revendication 1,
dans laquelle la plaquette de gomme à mâcher comprimée comprend 4 % à 30 % en poids de résines naturelles.

3. Plaquette de gomme à mâcher comprimée selon la revendication 1 ou 2,
dans laquelle la plaquette de gomme à mâcher comprimée comprend 0,5 % à 30 % en poids d'élastomères, de préférence de 5 % à 25 % en poids.

4. Plaquette de gomme à mâcher comprimée selon l'une quelconque des revendications 1 à 3,
dans laquelle la plaquette de gomme à mâcher comprimée comprend 0,1 % à 15 % en poids d'agents aromatisants, de préférence de 0,8 % à 5 % en poids.

5. Plaquette de gomme à mâcher comprimée selon l'une quelconque des revendications 1 à 4,
dans laquelle les résines naturelles fournissent une texture collante et améliorée à la tablette.

6. Plaquette de gomme à mâcher comprimée selon l'une quelconque des revendications 1 à 5,
dans laquelle ladite couche de barrière comprend, par exemple, des lubrifiants, des anti-adhérents et des agents de glissement.

7. Plaquette de gomme à mâcher comprimée selon l'une quelconque des revendications 1 à 6,
dans laquelle la couche de barrière comprend du stéarate de magnésium.

8. Plaquette de gomme à mâcher comprimée selon l'une quelconque des revendications 1 à 7,
dans laquelle ladite couche de barrière comprend des stéarates métalliques, des huiles végétales hydrogénées, des huiles végétales partiellement hydrogénées, des polyéthylène glycols, des monostéarates de polyoxyéthylène, des matières grasses animales, des silicates, du dioxyde de silicates, du talc, des stéarates de magnésium, des stéarates de calcium, de la silice pyrogénée, des huiles de graine de coton hydrogénées pulvérulentes, des huiles végétales hydrogénées, de l'huile de soja hydrogénée et des mélanges de ceux-ci.

9. Plaquette de gomme à mâcher comprimée selon l'une quelconque des revendications 1 à 8,
dans laquelle le centre de gomme comprend de la cire.

10. Plaquette de gomme à mâcher comprimée selon l'une quelconque des revendications 1 à 9,
dans laquelle le centre de gomme est dépourvu de cire.

11. Plaquette de gomme à mâcher comprimée selon l'une quelconque des revendications 1 à 10,
dans laquelle ladite couche de barrière est fournie pendant la fabrication de la tablette de gomme à mâcher.

12. Gomme à mâcher comprimée selon l'une quelconque des revendications 1 à 11, dans laquelle ladite résine naturelle comprend des esters de colophane.

13. Gomme à mâcher comprimée selon l'une quelconque des revendications 1 à 12, dans laquelle ladite résine naturelle comprend des glycérolesters de colophanes partiellement hydrogénées, des glycérolesters de colophanes polymérisées, des glycérolesters de colophanes partiellement dimérisées, des glycérolesters de colophanes de tallol, des pentaérythritolesters de colophanes partiellement hydrogénés, des méthylesters de colophanes, des méthylesters partiellement hydrogénés de colophanes ou des pentaérythritolesters de colophanes.

14. Gomme à mâcher comprimée selon l'une quelconque des revendications 1 à 13, dans laquelle lesdits additifs de gomme à mâcher comprennent des agents édulcorants en la quantité de 5 à 95 % en poids de la gomme à mâcher, plus typiquement de 20 à 80 % en poids, comme de 30 à 60 % en poids de la gomme.

15. Gomme à mâcher comprimée selon l'une quelconque des revendications 1 à 14, dans laquelle au moins une partie des agents aromatisants a été ajoutée dans la base de gomme avant la compression.

16. Gomme à mâcher comprimée selon l'une quelconque des revendications 1 à 15, dans laquelle lesdits additifs de gomme à mâcher comprennent des ingrédients actifs.

17. Gomme à mâcher comprimée selon l'une quelconque des revendications 1 à 16, dans laquelle au moins une partie desdits ingrédients actifs a été ajoutée dans la base de gomme avant la compression.

18. Procédé de fourniture d'une gomme à mâcher comprimée comprenant les étapes de
- mélange d'au moins un élastomère et d'au moins un plastifiant dans une base de gomme homogène,
- ladite base de gomme comprenant 5 % à 75 % en poids d'une résine naturelle,
- granulation de la base de gomme,
- mélange de la base de gomme granulée (32) avec des additifs de gomme à mâcher (33),
- dépôt d'une couche de barrière (L1, L2 ; 39) choisie dans le groupe des lubrifiants, des anti-adhérents et des agents de glissement ou de combinaisons de ceux-ci sur au moins une partie d'un centre de gomme formé par une formation de granulats, et
- compression du mélange en une tablette.

19. Procédé de fourniture d'une gomme à mâcher comprimée selon la revendication 18, dans lequel au moins une partie de la base de gomme est prémélangée avec un arôme.

20. Procédé de fourniture d'une gomme à mâcher comprimée selon la revendication 18 ou 19, dans lequel lesdits additifs de base de gomme comprennent des ingrédients actifs.

21. Procédé de fourniture d'une gomme à mâcher comprimée selon l'une quelconque des revendications 18 à 20,
dans lequel la couche de barrière comprend des stéarates métalliques, des huiles végétales hydrogénées, des huiles végétales partiellement hydrogénées, des polyéthylène glycols, des monostéarates de polyoxyéthylène, des matières grasses animales, des silicates, du dioxyde de silicates, du talc, des stéarates de magnésium, des stéarates de calcium, de la silice pyrogénée, des huiles de graine de coton hydrogénées pulvérulentes, des huiles végétales hydrogénées, de l'huile de soja hydrogénée et des mélanges de ceux-ci.

22. Gomme à mâcher selon l'une quelconque des revendications 1 à 18, dans laquelle la gomme à mâcher a une teneur en eau inférieure à 2,0 %, de préférence inférieure à 1,5 % en poids.
